# EUROPÄISCHE PATENTSCHRIFT

(11) **EP 1 686 269 B1**
(45) Veröffentlichungstag und Bekanntmachung des Hinweises auf die Patenterteilung: **07.10.2009**
(21) Anmeldenummer: 05027032.1
(22) Anmeldetag: 10.12.2005
(51) Int. Cl.: F16B 5/00, F16B 12/20, F16B 12/22, A47B 47/04, A47B 96/02

(54) **Verbinder für Platten, insbesondere für Tablare**
Connector for boards, especially for shelfs
Connecteur pour panneaux, en particulier pour planches d'étagère

(30) Priorität: 29.01.2005 DE 202005001451 U
(43) Veröffentlichungstag der Anmeldung: 02.08.2006
(73) Patentinhaber: Häfele GmbH & Co. KG, 72202 Nagold (DE)
(72) Erfinder: Walz, Rüdiger, 72401 Haigerloch (DE)
(74) Vertreter: Kohler Schmid Möbus

(56) Entgegenhaltungen:
- EP-A- 1 008 767
- WO-A-20/05059374
- DE-A1- 2 610 200

## Beschreibung

Die Erfindung bezieht sich auf einen Verbinder für Platten, insbesondere für Tablare, mit einer in eine Ausnehmung der einen Platte einsetzbaren Halterung, in welche ein mit der anderen Platte verbundenes Befestigungsglied etwa in Axialrichtung der Halterung einschiebbar ist, und einem in der Halterung gelagerten, aus einer Freigabe in eine Sperrstellung drehbaren Bolzen odgl.

Bei einer bekannten Ausführungsform ist in der Halterung eine Sperrscheibe drehbar gelagert, welche in eine Nut des Befestigungsgliedes eingreift. Dabei steigen die Auflagefläche der Nut und die Anlagefläche der Sperrscheibe in entgegengesetzter Richtung an, so dass ein axiales Anpressen des Befestigungsgliedes gegen die Halterung erfolgt. Bei einem anderen bekannten Beschlag, siehe DE 26 10 200 A, gemäß Oberbegriff des Anspruchs 1, besteht das Befestigungsglied aus einem Bolzen mit Vertiefung, wobei ein in der Halterung drehbar angeordnetes Riegelglied in die Bolzenvertiefung eingreift. Zwar werden hierdurch sowohl ein vertikaler als auch ein horizontaler Anzug erreicht, jedoch wird der Bolzen dabei quer zu seiner Einsteckrichtung verspannt, so dass auf diesen Scherkräfte einwirken.

Die Aufgabe der vorliegenden Erfindung ist es nunmehr, ein Anpressen der Teile des Verbindungsbeschlages und damit der Platten oder dergleichen sowohl in Längsrichtung als auch in Querrichtung des Verbindungsbeschlages zu erreichen, ohne dass auf die Teile irgendwelche Scherkräfte ausgeübt werden. Dies wird erfindungsgemäß durch die Merkmale des Anspruchs 1 erreicht.

Eine besonders günstige Ausbildung des Abstützgliedes ergibt sich, wenn man es als den Bolzen teilweise umfassendes, bogenförmiges und etwa axial gerichtetes Wandteil ausbildet. Der Bolzen weist vorzugsweise einen am Unterrand des Abstützgliedes anliegenden Flansch auf, wodurch die axiale Lage des Bolzens gesichert ist. Ebenfalls zur Verriegelung des Bolzens dient ein am Befestigungsglied angeordneter Zapfen, welcher sich in die Halterung bis zum Bolzen und zwar etwa quer zu dessen Längsachse erstreckt. Dieser Zapfen liegt dabei zweckmäßigerweise unterhalb des Bolzenflansches.

Vorzugsweise ist die Halterung etwa rohrförmig ausgebildet und in axialer Richtung mindestens teilweise geschlitzt. Sie weist außerdem an den Rändern ihres Schlitzes schräg nach unten innen verlaufende, schwalbenschwanzförmige Führungsnuten zur Aufnahme des Befestigungsgliedes auf.

Zur Abstützung des Bolzens ist in der Halterung ein Querboden vorgesehen, welcher aus Stabilitätsgründen durch eine axial verlaufende Querwand zusätzlich verstärkt ist. Der Bolzen selbst weist an seinem unteren Ende einen Führungsstift mit Sperrscheibe und der Boden eine entsprechende Ausnehmung auf, wobei die Sperrscheibe den Boden mindestens in der Sperrstellung des Bolzens untergreift.

Die Halterung ist vorzugsweise zur Abstützung auf einer zu befestigenden Platte mit einem oder mehreren seitlich hinausragenden plattenförmigen Flügeln mit Ausnehmungen für Schrauben oder dergleichen versehen. Das Befestigungsglied ist als eine das Halteglied überragende Abdeckplatte mit einem senkrecht hierzu verlaufenden, in die Nuten der Halterung einschiebbaren Schenkel ausgebildet, welcher einen etwa quer zu seiner Längsachse gerichteten Zapfen trägt. Durch die plattenförmige Ausbildung können die Schrauben, welche zur Befestigung der Halterung dienen, abgedeckt werden. Im Schenkel derselben befinden sich mindestens eine, insbesondere zwei Ausnehmungen für Befestigungsschrauben oder dergleichen. Die Abdeckplatte weist fernerhin einen Durchgriff zum Bolzen und dieser an seinem dem Lagerstift entgegengesetzten Ende ein oder mehrere Schlitze für den Eingriff eines Werkzeuges auf.

Die Zeichnung zeigt ein Ausführungsbeispiel der Erfindung. Es stellen dar:
- Figur 1: die perspektivische Ansicht der Halterung mit Bolzen vor seinem Einsetzen,
- Figur 2: die perspektivische Ansicht der Halterung mit eingesetztem Bolzen und mit Befestigungsteil vor dem Einsetzen,

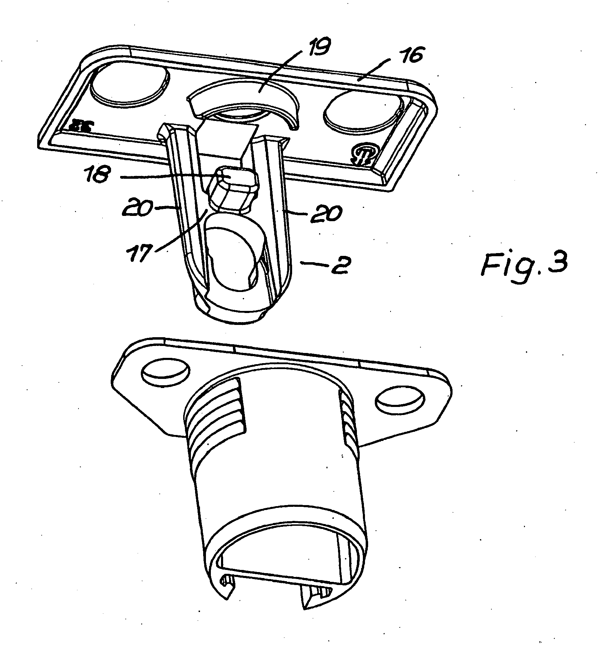

- Figur 3: eine Rückansicht nach Fig. 2,
- Figur 4: eine perspektivische Ansicht des zusammengesetzten Verbinders,
- Figur 5: eine perspektivische, teilweise geschnittene Rückansicht der Halterung mit eingesetztem Bolzen und Befestigungsteil in Freigabestellung des Bolzens in vergrößertem Maßtab,
- Figur 6: eine Darstellung nach Fig. 5 in Sperrstellung des Bolzens,
- Figur 7: einen Querschnitt nach Fig. 5,
- Figur 8: einen Querschnitt nach Fig. 6,
- Figur 9: einen Querschnitt durch zwei mittels des Verbinders aneinander befestigten Platten.

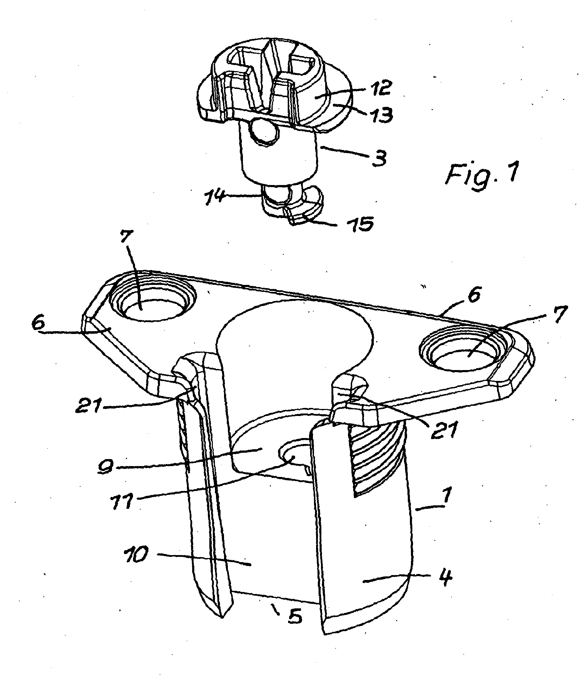

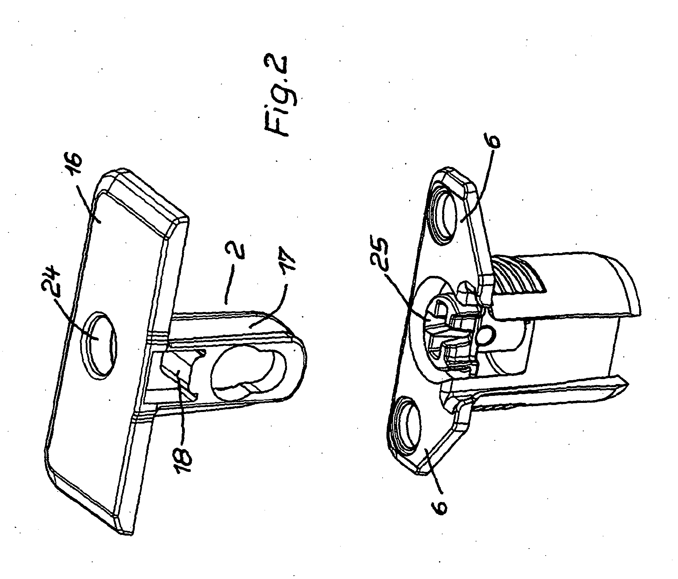

Der Verbinder setzt sich, wie die Fign. 1 und 2 zeigen, aus drei Teilen, nämlich der Halterung 1, dem Befestigungsteil 2 und dem Bolzen 3 zusammen.

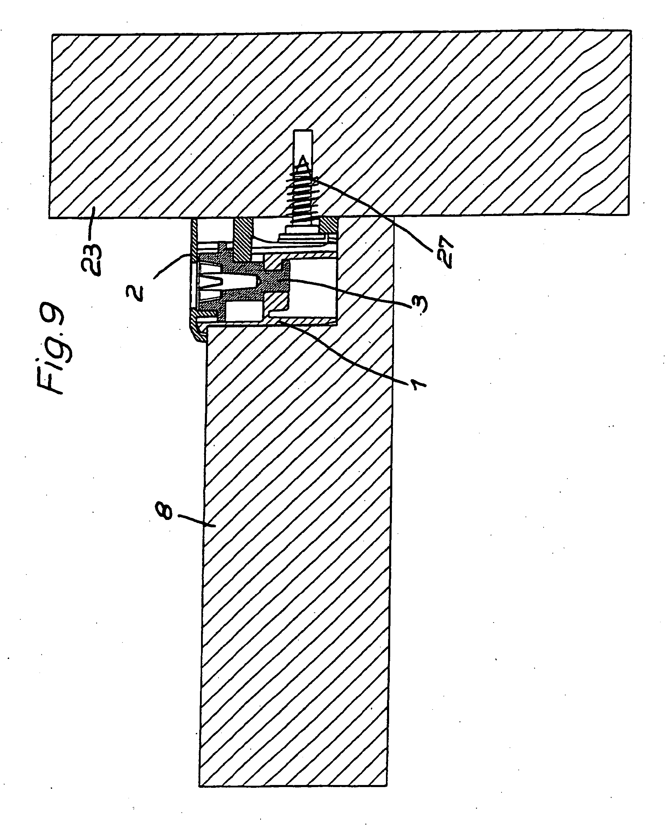

Die Halterung 1 besteht aus einem rohrförmigen Grundkörper 4, welcher einen in axialer Richtung verlaufenden Längsschlitz 5 aufweist. Am oberen Ende des rohrförmigen Grundkörpers 4 sind, insbesondere für die Verbindung von Wabenplatten, zwei seitlich hinausragende plattenförmige Flügel 6 mit Ausnehmungen 7 für nicht dargestellte Befestigungsschrauben vorgesehen. Mit diesen Flügeln stützt sich die Halterung auf der Oberfläche einer Platte 8 ab (Fig. 9) und ist mittels Befestigungsschrauben mit ihr verbunden. Etwa in der Mitte des rohrförmigen Grundkörpers 4 ist ein Querboden 9 angeordnet, welcher durch eine axial verlaufende Querwand 10 zusätzlich abgestützt ist. Der Querboden 9 weist eine Ausnehmung 11 für den Bolzen 3 auf.

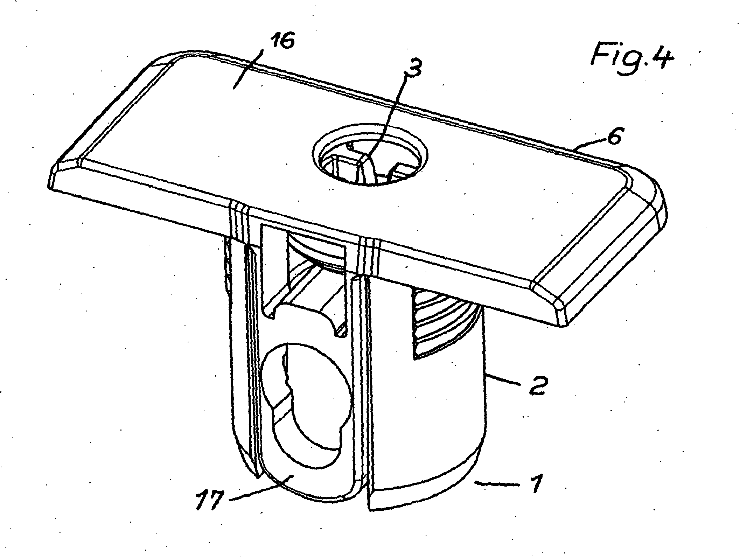

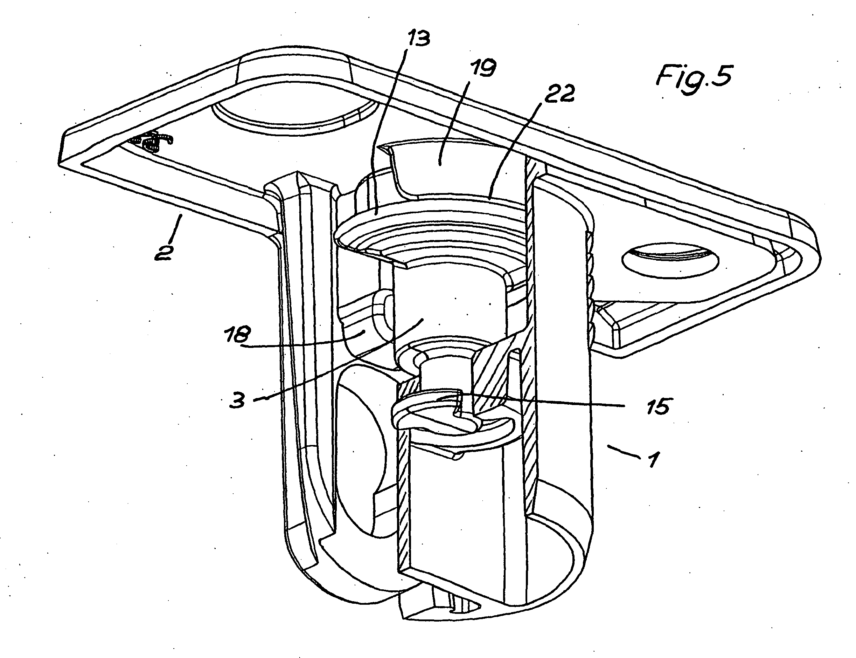

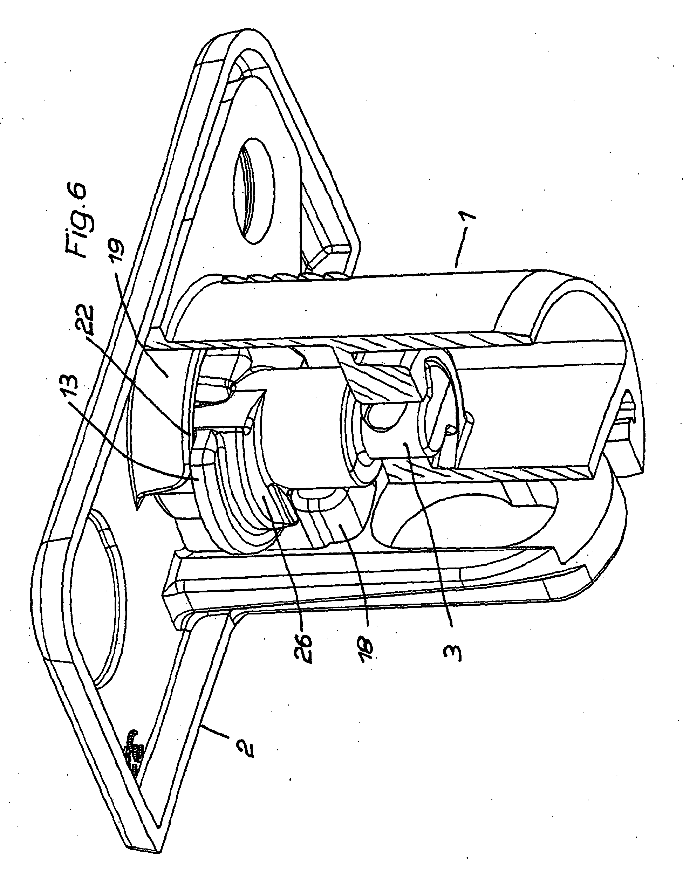

Der Bolzen 3 ist im rohrförmigen Grundkörper 4 der Halterung 1 auf dem Querboden 9 drehbar gelagert. Unterhalb des Bolzenkopfes 12 befindet sich ein einseitig abgeschnittener Flansch 13, welcher entgegen der Drehrichtung in die Sperrstellung leicht ansteigt. Am seinem unteren Ende ist ein Lagerstift 14 vorgesehen, welcher in die Ausnehmung 11 des Querbodens 9 eingreift und diesen mit einer Sperrscheibe 15 zumindest in der Sperrstellung des Verbinders untergreift. Die Ausnehmung 11 ist so geformt, dass der Bolzen 3 zumindest in der Freigabestellung nach Fig. 4 mit dem Lagerstift 14 und der Sperrscheibe 15 in die Ausnehmung 11 des Bodenteils 9 eingesetzt werden kann. Bei einer Drehung in die Sperrstellung nach Fig. 5 wird dann der Querboden 9 durch die Sperrscheibe 15 untergriffen, so dass der Bolzen 3 in seiner axialen Lage gehalten ist. Außerdem weist der Bolzen 3 unterhalb seines Flansches 13 einen Anschlag 26 (Fig. 6) auf, dessen Funktion weiter unten erläutert wird.

Das Befestigungsglied 2 setzt sich aus einer, die Halterung 1 mit seinen Flügeln 6 abdeckenden Platte 16 und einem senkrecht hierzu verlaufenden Schenkel 17 zusammen. Am Schenkel 17 ist ein quer zur Axialrichtung nach innen weisender Zapfen 18 zur Anlage am Bolzen 3 und damit zu dessen Verriegelung angeordnet. An der Platte 16 befindet sich entgegengesetzt vom Schenkel 17 ein von dieser axial nach unten ragendes bogenförmiges Wandteil 19, welches den Bolzenkopf 12 teilweise umgibt. Der Schenkel 17 ist weiterhin an seiner hinteren Kante mit zwei Führungsschienen 20 versehen, welche in zwei an den Rändern des Längsschlitzes 5 der Halterung 1 vorgesehene, schräg nach unten innen verlaufende, schwalbenschwanzförmige Führungsnuten 21 eingreifen. Die Halterung 1 kann nur eingesetzt werden, während sich der Bolzen 3 in der Freigabestellung nach Fig. 4 befindet.

Bei einer Drehung des Bolzens 3 im Uhrzeigersinn drückt der exzentrisch geformte Bolzenkopf 12 gegen das als Abstützglied dienende Wandteil 19, sodass das Befestigungsteil 2 an die Halterung 1 angepresst wird. Durch den ansteigenden Flansch 13, welcher am unteren Rand 22 des Wandteils 19 anliegt, erfolgt gleichzeitig auch ein Andrücken des Befestigungsteil 2 an die Halterung 1 in axialer Richtung. Es ergibt sich damit, sowohl in vertikaler als auch in horizontaler Richtung eine feste Verbindung der Teile miteinander, welche sich auch auf die mit ihnen verbundenen Platten 8, 23 (Fig.9) überträgt. Um ein Weiterdrehen über die Sperrstellung hinaus zu verhindern, liegt der Anschlag 26 in dieser Stellung am Zapfen 18 an (Fig.6). Die Teile lassen sich auch problemlos wiederum voneinander lösen, indem der Bolzen 3 aus der Sperrstellung nach Fig. 5 in die Freigabestellung nach Fig. 4 zurückgedreht wird.

Um eine leichte Einstellung des Bolzens 3 zu ermöglichen, sind in der Abdeckplatte 16 eine, den Bolzen 3 freigebende Ausnehmung 24 und im Bolzen 3 ein oder mehrere Schlitze 25 für den Eingriff eines Werkzeuges vorgesehen.

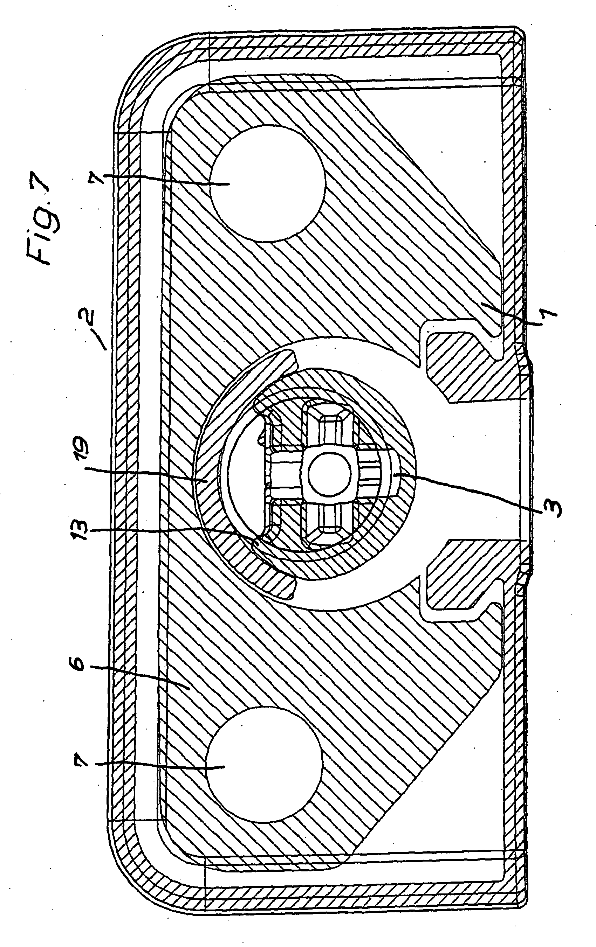

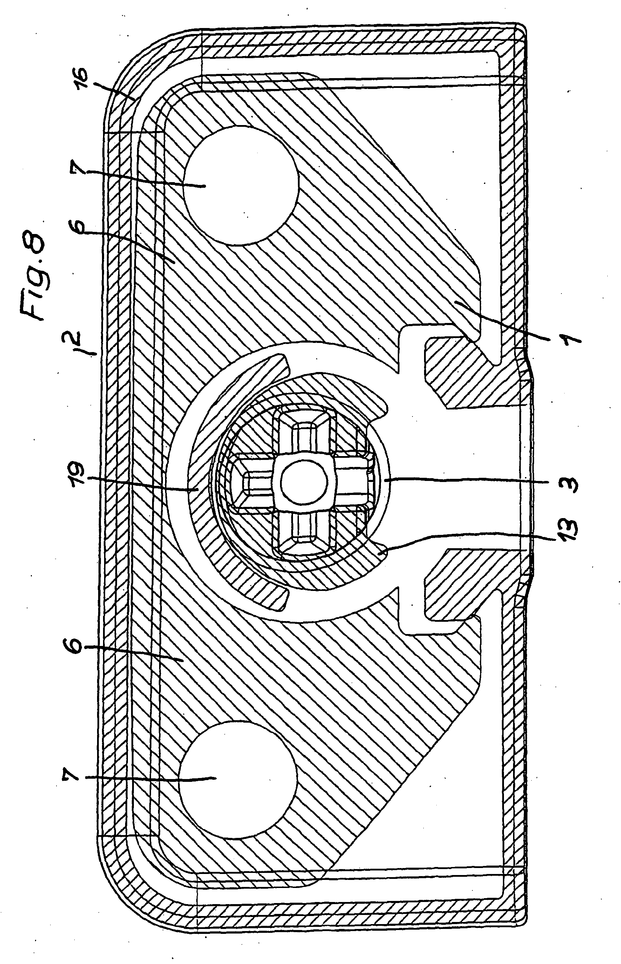

In den Figuren 7 und 8 sind in einem Schnitt die jeweiligen Lagen der Halterung 1 und des Befestigungsgliedes 2 zueinander in den beiden Endstellungen des Bolzens 3 dargestellt. Dabei zeigen Fig. 7 die Freigabestellung und Fig. 8 die Sperrstellung. In Fig. 9 wird der Einsatz des Verbinders als Tablar gezeigt, wobei sich die Halterung 1 in einer Ausnehmung der Platte 8 befindet und das Befestigungsglied 2 mittels einer Schraube 27 an der zweiten Platte 23 befestigt ist.

## Patentansprüche

1. Verbinder für Platten, insbesondere für Tablare, mit einer in eine Ausnehmung der einen Platte einsetzbaren Halterung (1), **dadurch gekennzeichnet, dass** in die Halterung (1) ein mit der anderen Platte verbundenes Befestigungsglied (2) etwa in Axialrichtung der Halterung (1) einschiebbar ist und in der Halterung (1) ein aus einer Freigabe in eine Sperrstellung drehbarer Bolzen (3) gelagert ist, wobei sich zwischen dem Umfang des Bolzens (3) und der Wand der Halterung (1) zur Anlage am Bolzen (3) ein Abstützglied (19) am Befestigungsglied (2) befindet, und der Bolzen (3) und/oder das Abstützglied (19) zum gegenseitigen Abdrücken und zum Anpressen des Befestigungsgliedes (2) an die Halterung (1) eine insbesondere kurvenförmig geformte Verdickung oder eine mindestens teilweise exzentrische Gestaltung aufweisen.

2. Verbinder nach Anspruch 1, **dadurch gekennzeichnet, dass** das Abstützglied (19) als den Bolzen (3) teilweise umfassendes, bogenförmiges und etwa axial gerichtetes Wandteil ausgebildet ist.

3. Verbinder nach Anspruch 1, **dadurch gekennzeichnet, dass** der Bolzen (3) einen am unteren Rand (22) des Abstützgliedes (19) anliegenden Flansch (13) aufweist.

4. Verbinder nach einem oder mehreren der vorhergehenden Ansprüche, **dadurch gekennzeichnet, dass** der Flansch (13) entgegen der Drehrichtung in die Sperrstellung ansteigt.

5. Verbinder nach einem oder mehreren der vorhergehenden Ansprüche, **dadurch gekennzeichnet, dass** am Befestigungsglied (2) ein sich in die Halterung (1) bis zum Bolzen (3) etwa quer zu dessen Längsachse erstreckender Zapfen (18) angeordnet ist.

6. Verbinder nach Anspruch 5, **dadurch gekennzeichnet, dass** der Bolzen (3) zur Begrenzung seiner Drehbewegung über die Sperrstellung hinaus einen mit dem Zapfen (18) zusammenwirkenden Anschlag (26) aufweist.

7. Verbinder nach einem oder beiden der vorhergehenden Ansprüche 5 bis 6, **dadurch gekennzeichnet, dass** der Zapfen (18) unterhalb des Bolzenflansches (13) liegt.

8. Verbinder nach einem oder mehreren der vorhergehenden Ansprüche, **dadurch gekennzeichnet, dass** die Halterung (1) etwa rohrförmig (4) ausgebildet und in axialer Richtung mindestens teilweise geschlitzt (5) ist.

9. Verbinder nach Anspruch 8, **dadurch gekennzeichnet, dass** die Halterung (1) an den Rändern ihres Schlitzes schräg nach unten innen verlaufende, schwalbenschwanzförmige Führungsnuten (21) zur Aufnahme des Befestigungsgliedes (2) aufweist.

10. Verbinder nach einem oder mehreren der vorhergehenden Ansprüche, **dadurch gekennzeichnet, dass** die Halterung (1) einen Querboden (9) zur Abstützung des Bolzens (3) aufweist.

11. Verbinder nach Anspruch 10, **dadurch gekennzeichnet, dass** der Querboden (9) durch eine axial verlaufende Querwand (10) abgestützt ist.

12. Verbinder nach einem oder beiden der vorhergehenden Ansprüche 10 bis 11, **dadurch gekennzeichnet, dass** der Bolzen (3) an seinem unteren Ende einen Lagerstift (14) mit Sperrscheibe (15) und der Querboden (9) eine entsprechende Ausnehmung (11) aufweisen, wobei die Sperrscheibe (15) den Querboden (9) mindestens in der Sperrstellung des Bolzens (3) untergreift.

13. Verbinder nach einem oder mehreren der vorhergehenden Ansprüche, **dadurch gekennzeichnet, dass** die Halterung (1) zur Abstützung auf einer zu befestigenden Platte (8) einen oder mehrere seitlich hinausragende plattenförmige Flügel (6) mit Ausnehmungen (7) für Schrauben oder dergleichen aufweist.

14. Verbinder nach einem oder mehreren der vorhergehenden Ansprüche 4-13, **dadurch gekennzeichnet, dass** das Befestigungsglied (2) als eine die Halterung überragende Abdeckplatte (16) mit senkrecht hierzu verlaufenden, in die Führungsnuten (21) der Halterung (1) einschiebbarem Schenkel (17) ausgebildet ist, welcher einen etwa quer zu seiner Längsachse gerichteten Zapfen (18) trägt.

15. Verbinder nach Anspruch 14, **dadurch gekennzeichnet, dass** die Abdeckplatte (16) einen Durchgriff (24) und der Bolzen (3) an seinem dem Lagerstift (14) entgegengesetzten Ende ein oder mehrere Schlitze (26) für den Eingriff eines Werkzeuges aufweisen.

## Claims

1. Connector for panels, in particular for shelves, having a holder (1) which can be introduced into a recess of one panel, **characterised in that** a fixing member (2) which is connected to the other panel can be introduced into the holder (1) substantially in the axial direction of the holder (1) and a pin (3) which can be rotated from a release into a locking position is supported in the holder (1), with a support member (19) being located on the fixing member (2) between the periphery of the pin (3) and the wall of the holder (1) for abutment against the pin (3), and the pin (3) and/or the support member (19) having a thickening which is in particular curved or an at least partially eccentric shape for mutual pressure and for pressing the fixing member (2) against the holder (1).

2. Connector according to claim 1, **characterised in that** the support member (19) is in the form of a curved wall member which partially surrounds the pin (3) and which is directed substantially axially.

3. Connector according to claim 1, **characterised in that** the pin (3) has a flange (13) which abuts the lower edge (22) of the support member (19).

4. Connector according to one or more of the preceding claims, **characterised in that** the flange (13) rises counter to the direction of rotation into the locking position.

5. Connector according to one or more of the preceding claims, **characterised in that** there is arranged on the fixing member (2) a stud (18) which extends into the holder (1) as far as the pin (3) substantially transversely relative to the longitudinal axis thereof.

6. Connector according to claim 5, **characterised in that** the pin (3) has a stop (26) which cooperates with the stud (18) in order to limit the rotational movement thereof beyond the locking position.

7. Connector according to either or both of the preceding claims 5 and 6, **characterised in that** the stud (18) is below the pin flange (13).

8. Connector according to one or more of the preceding claims, **characterised in that** the holder (1) is constructed so as to be substantially tubular (4) and is slotted (5) at least partially in an axial direction.

9. Connector according to claim 8, **characterised in that** the holder (1) has, at the edges of the slot thereof, dovetail-like guide channels (21) which extend inwards in an oblique downward direction and which are intended to receive the fixing member (2).

10. Connector according to one or more of the preceding claims, **characterised in that** the holder (1) has a transverse base (9) in order to support the pin (3).

11. Connector according to claim 10, **characterised in that** the transverse base (9) is supported by an axially extending transverse wall (10).

12. Connector according to either or both of the preceding claims 10 and 11, **characterised in that** the pin (3) has a bearing pin (14) having a locking plate (15) at the lower end thereof and the transverse base (9) has a corresponding recess (11), with the locking plate (15) engaging below the transverse base (9) at least in the locking position of the pin (3).

13. Connector according to one or more of the preceding claims, **characterised in that** the holder (1) has, in order to be supported on a panel (8) which is intended to be secured, one or more laterally protruding, plate-like wings (6) having recesses (7) for screws or the like.

14. Connector according to one or more of the preceding claims 4 to 13, **characterised in that** the fixing member (2) is in the form of a cover plate (16) which protrudes beyond the holder and which has a member (17) which extends perpendicularly relative thereto and which can be introduced into the guide channels (21) of the holder (1), and which carries a stud (18) which is directed substantially transversely relative to the longitudinal axis thereof.

15. Connector according to claim 14, **characterised in that** the cover plate (16) has an opening (24) and the pin (3) has, at the end opposite the bearing pin (14), one or more slots (26) for the engagement of a tool.

## Revendications

1. Connecteur pour panneaux, en particulier pour des planches d'étagère, avec un support (1) pouvant être inséré dans un évidement d'un des panneaux, **caractérisé en ce qu'**un organe de fixation (2) assemblé à l'autre panneau peut être enfilé dans le support (1) environ dans la direction axiale du support (1), et un boulon (3) est monté dans le support (1) en étant rotatif d'une position de libération dans une position de blocage, sachant qu'un organe de soutien (19) destiné à s'appliquer contre le boulon (3) se trouve sur l'organe de fixation (2) entre la périphérie du boulon (3) et la paroi du support (1), et que le boulon (3) et/ou l'organe de soutien (19) présentent, afin de se repousser mutuellement et de presser l'organe de fixation (2) contre le support (1), un épaississement notamment de forme courbe, ou une configuration au moins partiellement excentrique.

2. Connecteur selon la revendication 1, **caractérisé en ce que** l'organe de soutien (19) est réalisé sous la forme d'une partie de paroi arquée et dirigée approximativement axialement qui entoure partiellement le boulon (3).

3. Connecteur selon la revendication 1, **caractérisé en ce que** le boulon (3) présente un collet (13) s'appliquant contre le bord inférieur (22) de l'organe de soutien (19).

4. Connecteur selon une ou plusieurs des revendications précédentes, **caractérisé en ce que** le collet (13) est ascendant à l'encontre de la direction de rotation dans la position de blocage.

5. Connecteur selon une ou plusieurs des revendications précédentes, **caractérisé en ce qu'**un tenon (18) est disposé sur l'organe de fixation (2), tenon qui s'étend dans le support (1) jusqu'au boulon (3) environ transversalement à l'axe longitudinal de ce dernier.

6. Connecteur selon la revendication 5, **caractérisé en ce que** le boulon (3) présente, afin de limiter son mouvement de rotation au-delà de la position de blocage, une butée (26) qui coopère avec le tenon (18).

7. Connecteur selon une ou deux des revendications précédentes 5 à 6, **caractérisé en ce que** le tenon (18) se trouve en-dessous du collet (13) du boulon.

8. Connecteur selon une ou plusieurs des revendications précédentes, **caractérisé en ce que** le support (1) est réalisé approximativement tubulaire (4) et est au moins partiellement fendu (5) en direction axiale.

9. Connecteur selon la revendication 8, **caractérisé en ce que** le support (1) présente, sur les bords de sa fente, des rainures de guidage (21) en queue d'aronde, s'étendant en oblique vers le bas et vers l'intérieur et destinées à recevoir l'organe de fixation (2).

10. Connecteur selon une ou plusieurs des revendications précédentes, **caractérisé en ce que** le support (1) présente un fond transversal (9) pour soutenir le boulon (3).

11. Connecteur selon la revendication 10, **caractérisé en ce que** le fond transversal (9) est soutenu par une paroi transversale (10) s'étendant axialement.

12. Connecteur selon une ou deux des revendications précédentes 10 à 11, **caractérisé en ce que** le boulon (3) présente à son extrémité inférieure un axe de montage (14) pourvu d'une rondelle de blocage (15), et le fond transversal (9) présente un évidement correspondant (11), sachant que la rondelle de blocage (15) vient en prise par dessous le fond transversal (9) au moins dans la position de blocage du boulon (3).

13. Connecteur selon une ou plusieurs des revendications précédentes, **caractérisé en ce que** le support (1) présente, pour le soutien sur un panneau (8) à fixer, une ou plusieurs pattes (6) en forme de plaques latéralement dépassantes, avec des évidements (7) pour des vis ou analogues.

14. Connecteur selon une ou plusieurs des revendications précédentes 4 à 13, **caractérisé en ce que** l'organe de fixation (2) est réalisé sous la forme d'une plaque de recouvrement (16) dépassant du support et pourvue d'une branche (17) s'étendant perpendiculairement à la plaque et pouvant être enfilée dans les rainures de guidage (21) du support (1), branche qui porte un tenon (18) orienté environ transversalement à son axe longitudinal.

15. Connecteur selon la revendication 14, **caractérisé en ce que** la plaque de recouvrement (16) présente un passage (24) et le boulon (3) présente à son extrémité opposée à l'axe de montage (14) une ou plusieurs fentes (25), pour l'engagement d'un outil.
